# EUROPEAN PATENT SPECIFICATION

(11) **EP 4 187 702 B1**
(45) Date of publication and mention of the grant of the patent: **04.06.2025**
(21) Application number: 22736944.4
(22) Date of filing: 11.01.2022
(51) Int. Cl.: H01M 50/249, H01M 10/6556, H01M 10/6567, H01M 10/625

(54) **BATTERY PACK AND VEHICLE COMPRISING SAME**
BATTERIEPACK UND FAHRZEUG DAMIT
BLOC-BATTERIE ET VÉHICULE LE COMPRENANT

(30) Priority: 11.01.2021 KR 20210003550
(43) Date of publication of application: 31.05.2023
(73) Proprietor: LG Energy Solution, Ltd., Seoul 07335 (KR)
(72) Inventor: OH, Kwang-Keun, Daejeon 34122 (KR); YANG, Jin-Oh, Daejeon 34122 (KR); JUNG, In-Hyuk, Daejeon 34122 (KR); CHOI, Hae-Won, Daejeon 34122 (KR)
(74) Representative: Goddar, Heinz J.
(86) International application number: PCT/KR2022/000504
(87) International publication number: WO 2022/149967

(56) References cited:
- CN-A- 110 994 068
- CN-A- 111 029 512
- CN-A- 112 072 025
- KR-A- 20150 127 863
- KR-A- 20180 113 419
- KR-A- 20190 040 837
- KR-A- 20190 069 873
- US-A1- 2017 288 286

## Description

### TECHNICAL FIELD

The present disclosure relates to a battery pack and a vehicle comprising the same.

### BACKGROUND ART

Due to their characteristics of being easily applicable to various products and electrical properties such as a high energy density, secondary batteries are not only commonly applied to portable devices, but universally applied to electric vehicles (EVs) or hybrid electric vehicle (HEVs) that are driven by an electrical driving source. Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack or a battery rack using at least one battery module with an addition of any other component.

In general, the conventional battery pack includes a plurality of battery cells and a cell frame to accommodate the plurality of battery cells. In general, the conventional cell frame includes an assembly of a plurality of plates including a front plate, a rear plate, a side plate, a lower plate and an upper plate.

However, the conventional battery pack has increases in manufacturing cost and assembly process complexity due to the characteristics of the cell frame structure including the assembly of the plurality of plates, and thus has price competitiveness and fabrication efficiency disadvantages.

Moreover, due to the cell frame structure including the assembly of the plurality of plates, the conventional battery pack increases in its total size and thus has an energy density disadvantage. Relevant prior art is document CN110994068 A.

### DISCLOSURE

### Technical Problem

Accordingly, the present disclosure is directed to providing a battery pack with increased energy density and strength and a vehicle comprising the same.

Additionally, the present disclosure is further directed to providing a battery pack with improved price competitiveness and fabrication efficiency and a vehicle comprising the same.

### Technical Solution

To solve the above-described problem, the present disclosure provides a battery pack which is mounted in a vehicle, the battery pack including a plurality of battery cells; a base plate to support the plurality of battery cells; and a cross beam unit which is positioned over a predetermined length along a widthwise direction of the base plate, and interposed between the plurality of battery cells in a lengthwise direction of the base plate to attach and fix the facing battery cells in the lengthwise direction.

A positive and negative electrode structure for electrical connection of the plurality of battery cells may be provided on one surface of the plurality of battery cells, and the cross beam unit is attached to an opposite surface of the plurality of battery cells.

One surface of the plurality of battery cells may be spaced a predetermined distance apart from one surface of the facing battery cells in the lengthwise direction.

The cross beam unit may include a cooling water channel to cool the plurality of battery cells.

The battery pack may include a cover plate to cover an upper portion of the plurality of battery cells, wherein the cover plate is disposed opposite the base plate with the plurality of battery cells interposed between the base plate and the cover plate.

The cross beam unit may be positioned between the base plate and the cover plate, and placed in contact with each of the base plate and the cover plate.

The cross beam unit may include a plurality of beam members, and the plurality of beam members may be spaced a predetermined distance apart along the lengthwise direction of the base plate.

The plurality of beam members may include a beam body which has a cooling water channel inside, and is formed over a predetermined length along the widthwise direction of the base plate; a first flange which is provided at a lower end of the beam body and placed in contact with the base plate; and a second flange which is provided at an upper end of the beam body opposite the first flange and placed in contact with the cover plate.

The first flange and the second flange may have a larger thickness than the beam body in the lengthwise direction.

The first flange may cover at least part of an upper portion of the plurality of battery cells in the lengthwise direction, and the second flange may cover at least part of a lower portion of the plurality of battery cells in the lengthwise direction.

The plurality of battery cells may be directly attached to each of two surfaces of the beam body in the lengthwise direction.

The plurality of battery cells may be symmetrically arranged with the beam body interposed between the plurality of battery cells in the lengthwise direction.

Additionally, the present disclosure provides a vehicle including at least one battery pack according to the above-described embodiments.

### Advantageous Effects

According to the various embodiments as described above, it is possible to provide a battery pack with increased energy density and strength and a vehicle comprising the same.

Additionally, according to the various embodiments as described above, it is possible to provide a battery pack with improved price competitiveness and fabrication efficiency and a vehicle comprising the same.

### DESCRIPTION OF DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawings.
FIG. 1 is a diagram illustrating a battery pack according to an embodiment of the present disclosure.
FIG. 2 is an exploded perspective view of the battery pack of FIG. 1.
FIG. 3 is a diagram illustrating a beam member of a cross beam unit of the battery pack of FIG. 2.
FIG. 4 is a cross-sectional view of the beam member of FIG. 3.
FIG. 5 is a diagram illustrating a battery cell fixed to the beam member of FIG. 3.
FIG. 6 is a cross-sectional view of the battery pack of FIG. 1.
FIG. 7 is a diagram illustrating a battery pack according to another embodiment of the present disclosure.
FIG. 8 is a diagram illustrating a vehicle according to an embodiment of the present disclosure.

### BEST MODE

The present disclosure will become apparent by describing a preferred embodiment of the present disclosure in detail with reference to the accompanying drawings. The embodiment described herein is provided by way of illustration to help an understanding of the present disclosure, and it should be understood that various modifications may be made to the present disclosure in any other embodiment than the embodiments described herein. Additionally, to help an understanding of the present disclosure, the accompanying drawings are not shown in true scale and may depict some exaggerated elements.

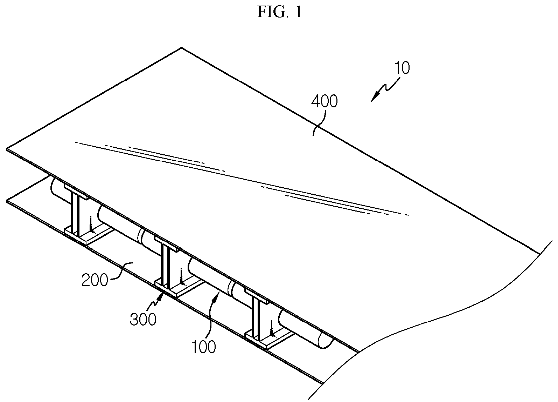

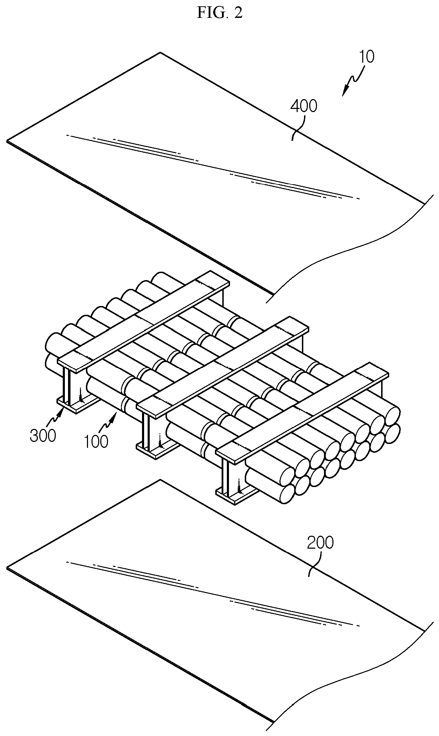

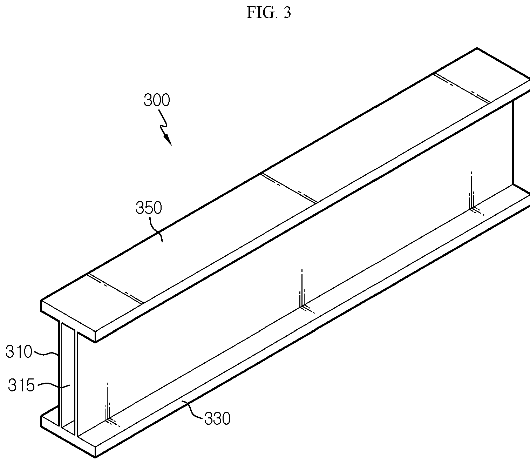

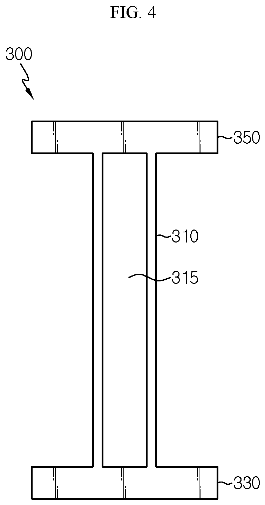

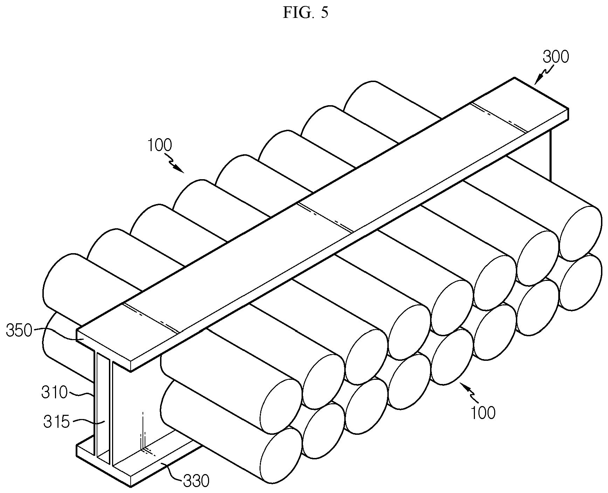

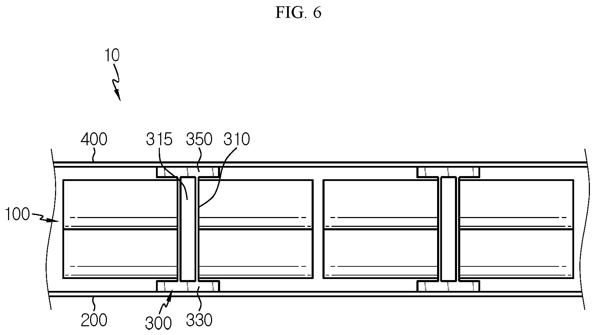

FIG. 1 is a diagram illustrating a battery pack according to an embodiment of the present disclosure, FIG. 2 is an exploded perspective view of the battery pack of FIG. 1, FIG. 3 is a diagram illustrating a beam member of a cross beam unit of the battery pack of FIG. 2, FIG. 4 is a cross-sectional view of the beam member of FIG. 3, FIG. 5 is a diagram illustrating a battery cell fixed to the beam member of FIG. 3, and FIG. 6 is a cross-sectional view of the battery pack of FIG. 1.

Referring to FIGS. 1 to 6, the battery pack 10 is mounted in a vehicle, and may include a battery cell 100, a base plate 200 and a cross beam unit 300.

Additionally, the battery pack 10 may further include a cover plate 400.

Hereinafter, the battery pack 10 will be described in more detail.

At least one battery cell 100 may be provided. Hereinafter, in this embodiment, a description is made based on a plurality of battery cells 100.

The plurality of battery cells 100 may include secondary batteries, for example, pouch type secondary batteries, prismatic secondary batteries or cylindrical secondary batteries. Hereinafter, in this embodiment, a description is made based on cylindrical secondary batteries as the plurality of battery cells 100.

An electrical connection structure having a positive and negative electrode structure for electrical connection of the plurality of battery cells 100 may be formed on one surface of the plurality of battery cells 100.

One surface of the plurality of battery cells 100 may be spaced a predetermined distance apart from one surface of the facing battery cells 100 for the connection to a busbar plate for electrical connection of the positive and negative electrode structure in the lengthwise direction of the base plate 200 as described below.

The positive and negative electrode structure may not be formed on the opposite surface of the plurality of battery cells 100. The opposite surface of the plurality of battery cells 100 may be attached to the cross beam unit 300 as described below.

The base plate 200 is used to support the plurality of battery cells 100, and may have an appropriate shape and size for seating the plurality of battery cells 100.

The base plate 200 may be mounted in the vehicle. The lengthwise direction of the base plate 200 may be parallel to the lengthwise direction of the vehicle, and the widthwise direction of the base plate 200 may be the widthwise direction of left and right sides of the vehicle.

The cross beam unit 300 may be positioned over a predetermined length along the widthwise direction of the base plate 200, and may be interposed between the plurality of battery cells 100 in the lengthwise direction of the base plate 200 to attach and fix the facing battery cells 100 in the lengthwise direction. The cross beam unit 300 may include a cooling water channel 315 inside.

The cross beam unit 300 may be made of a metal having a predetermined strength to ensure strength. In this embodiment, the attachment of the cross beam unit 300 and the plurality of battery cells 100 is performed on the opposite surface of the plurality of battery cells 100 in which the electrode of the battery cells 100 is not formed, thereby preventing an electrical short caused by the attachment.

The cross beam unit 300 may be positioned between the base plate 200 and the cover plate 400 as described below, and may be placed in contact with each of the base plate 200 and the cover plate 400 as described below.

The cross beam unit 300 may enhance the strength of the battery pack 300, and prevent the transfer of impacts to the plurality of battery cells 100 or absorb the impacts when external impacts occur in the widthwise direction of the base plate 200, i.e., in the widthwise direction of the battery pack 300.

To this end, the cross beam unit 300 may extended out from the plurality of battery cells 100 in the widthwise direction of the base plate 200.

Accordingly, when external impacts occur in the widthwise direction, the cross beam unit 300 may be subjected to the external impacts earlier than the plurality of battery cells 100 and mitigate or absorb the impacts, thereby minimizing the transfer of the impacts to the plurality of battery cells 100.

For example, when external impacts occur at one side of the widthwise direction, the cross beam unit 300 may be subjected to the external impacts earlier than the plurality of battery cells 100 and transfer the impacts to the opposite side of the widthwise direction, thereby effectively preventing the transfer of the impacts to the plurality of battery cells 100.

Hereinafter, the cross beam unit 300 according to this embodiment will be described in more detail.

The cross beam unit 300 may include a plurality of beam members 300.

The plurality of beam members 300 may be spaced a predetermined distance apart along the lengthwise direction of the base plate 200. The plurality of beam members 300 may be extended from the plurality of battery cells 100 in the widthwise direction of the base plate 200.

Each of the plurality of beam members 300 may include a beam body 310, a first flange 330 and a second flange 350.

The beam body 310 may have the cooling water channel 315 inside, and may be formed over a predetermined length along the widthwise direction of the base plate 200. When external impacts occur, the beam body 310 may be subjected to the external impacts and mitigate and absorb the impacts earlier than the plurality of battery cells 100.

The plurality of battery cells 100 may be attached to each of two surfaces along the lengthwise direction of the beam body 310. Accordingly, the plurality of battery cells 100 may be symmetrically arranged with the beam body 310 interposed between them in the lengthwise direction.

For example, the plurality of battery cells 100 may be directly attached to each of the two surfaces of the beam body 310 in the lengthwise direction. Specifically, the opposite surface of the plurality of battery cells 100 may be directly attached to each of the two surfaces of the beam body 310 in the lengthwise direction.

The attachment of the plurality of battery cells 100 may be performed with an adhesive or a double-sided tape. The present disclosure is not limited thereto, and the beam body 310 may have, on the two surfaces, a groove of a predetermined shape, through which the opposite surface of the plurality of battery cells 100 is inserted. Additionally, an attachment guide member may be provided between the beam body 310 and the opposite surface of the plurality of battery cells 100 to guide the attachment between them. The attachment guide member may be attached to each of the two surfaces of the beam body 310 after the insertion of the opposite surface of the plurality of battery cells 100.

Meanwhile, a heat transfer material having an adhesive substance may be provided between the plurality of battery cells 100 and the beam body 310 to increase the cooling performance of the plurality of battery cells 100.

The cooling water channel 315 is used to cool the plurality of battery cells 100, and cooling water for cooling the plurality of battery cells 100 may flow in the cooling water channel 315.

The first flange 330 is used to enhance the strength of the beam body 310, and may be provided at the lower end of the beam body 310. The first flange 330 may be placed in contact with the base plate 200.

The first flange 330 may have a larger thickness than the beam body 310 in the lengthwise direction. The first flange 330 may cover at least part of the upper portion of the plurality of battery cells 100 in the lengthwise direction.

Accordingly, the first flange 330 may effectively guide the more stable fixing and support of the plurality of battery cells 100 to the beam body 310.

The second flange 350 is used to enhance the strength of the beam body 310, and may be provided at the upper end of the beam body 310 opposite the first flange 330 and placed in contact with the cover plate 400 as described below.

The second flange 350 may have a larger thickness than the beam body 310 in the lengthwise direction. The second flange 350 may cover at least part of the lower portion of the plurality of battery cells 100 in the lengthwise direction.

Accordingly, the second flange 350 may effectively guide the more stable fixing and support of the plurality of battery cells 100 to the beam body 310.

The cover plate 400 may cover the plurality of battery cells 100 from above, and may be disposed opposite the base plate 200 with the plurality of battery cells 100 interposed between the cover plate 400 and the base plate 200.

As described above, the battery pack 10 according to this embodiment may enhance the strength of the battery pack 10 and fix the plurality of battery cells 100 more stably without the conventional cell frame structure including a plurality of plate members through the cross beam unit 300.

Accordingly, the battery pack 10 according to this embodiment may omit the conventional cell frame structure, thereby reducing the total size of the battery pack 10 and increasing the energy density of the battery pack 10.

Additionally, since the conventional cell frame structure including a plurality of plate members is omitted, the battery pack 10 according to this embodiment may reduce the fabrication cost of the battery pack 10 and significantly increase the assembly process rate.

Accordingly, the battery pack 10 according to this embodiment may increase the cost competitiveness in the manufacture of the battery pack 10, and significantly increase the assembly process efficiency in the fabrication process.

Furthermore, as the battery pack 10 according to this embodiment includes the cooling water channel 315 for the flow of the cooling water in the cross beam unit 300, it is possible to effectively cool the plurality of battery cells 100 without any additional structure such as a heat sink.

Accordingly, the battery pack 10 according to this embodiment may also omit the stack structure of the conventional structure such as a heat sink, thereby reducing the total size of the battery pack 10 and significantly increasing the energy density of the battery pack 10.

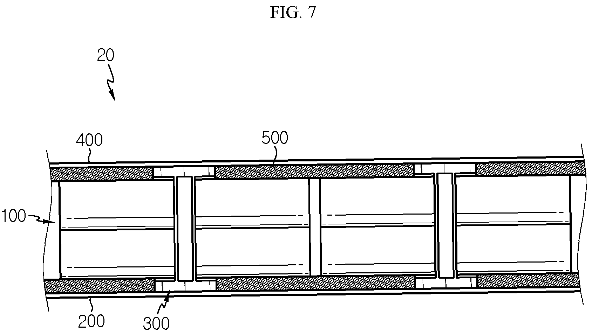

FIG. 7 is a diagram illustrating a battery pack according to another embodiment of the present disclosure.

The battery pack 20 according to this embodiment is similar to the battery pack 10 of the previous embodiment, and an overlapping description of the elements that are substantially identical or similar to the previous embodiment is omitted, and the following description will be made based on difference(s) between this embodiment and the previous embodiment.

Referring to FIG. 7, the battery pack 20 may include the plurality of battery cells 100, the base plate 200, the cross beam unit 300, the cover plate 400 and a cell support guider 500.

The plurality of battery cells 100, the base plate 200, the cross beam unit 300 and the cover plate 400 are substantially identical or similar to the previous embodiment, and an overlapping description is omitted.

The cell support guider 500 may support the upper and lower portions of the plurality of battery cells 100 between the base plate 200 and the cover plate 300.

The cell support guider 500 may have a support space having a corrugated shape corresponding to the stack shape of the battery cells 100 to support the upper and lower portions of the plurality of battery cells 100 more stably.

Accordingly, in this embodiment, the plurality of battery cells 100 may be fixed and supported between the base plate 200 and the cover plate 300 more firmly through the cell support guider 500.

Furthermore, the cell support guider 500 may include a heat transfer material to increase the cooling performance of the plurality of battery cells 100. Accordingly, in this embodiment, it is possible to further improve the cooling performance of the battery pack 20. The heat transfer material may include, for example, a thermal grease, an elastomer pad, a graphite pad and a thermal silicone pad.

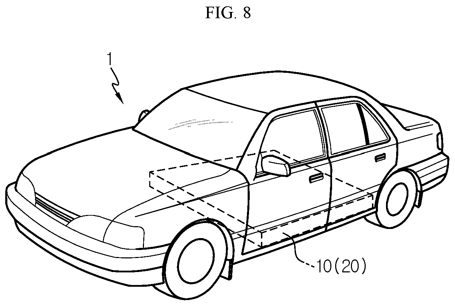

FIG. 8 is a diagram illustrating a vehicle according to an embodiment of the present disclosure.

Referring to FIG. 8, the battery pack 10,20 may be provided in the vehicle 1 as a fuel source of the vehicle. The battery pack 10,20 may be provided in the vehicle 1, for example, an electric vehicle, a hybrid electric vehicle and any other application using the battery pack 10,20 as a fuel source.

The battery pack 10,20 of this embodiment may be mounted in the vehicle 1 in a modularized form. For example, a plurality of battery packs 10,20 may be provided to meet the required capacity and may be mounted in the vehicle 1 such that they are electrically connected to each other in the vehicle 1.

In this embodiment, as the battery pack 10,20 includes the cross beam unit 300, it is possible to omit a structure such as a cross beam that has been separately provided in the vehicle through the mounted battery pack 10,20.

Accordingly, the vehicle 1 according to this embodiment may have a more space for mounting the battery pack 10,20 in the vehicle 1, thereby increasing the energy density of the battery pack 10,20 mounted in the vehicle 1.

Furthermore, as the vehicle 1 according to this embodiment includes the cooling water channel 315 in the cross beam unit 300 of the battery pack 10,20, it is possible to simplify the structure of the cooling unit such as a heat sink for cooling the battery pack 10,20, and additionally have a space in which the battery pack 10,20 is mounted in the vehicle 1, thereby significantly increasing the energy density of the battery pack 10,20 mounted in the vehicle 1.

Additionally, in addition to the vehicle 1, the battery pack 10,20 may be provided in any other device, apparatus and equipment using secondary batteries, for example, an energy storage system.

According to the various embodiments as described above, it is possible to provide the battery pack 10,20 with increased energy density and strength and the vehicle 1 comprising the same.

Additionally, according to the various embodiments as described above, it is possible to provide the battery pack 10,20 with improved cost competitiveness and fabrication efficiency and the vehicle 1 comprising the same.

While a preferred embodiment of the present disclosure has been hereinabove illustrated and described, the present disclosure is not limited to the above-described particular embodiment and it is obvious to those skilled in the art that a variety of modifications and changes may be made thereto without departing from the scope of the invention as defined in the appended claims.

## Claims

1. A battery pack (10) which is mounted in a vehicle, the battery pack (10) comprising:
a plurality of battery cells (100);
a base plate (200) to support the plurality of battery cells (100); and
a cross beam unit (300) which is positioned over a predetermined length along a widthwise direction of the base plate (200), and interposed between the plurality of battery cells (100) in a lengthwise direction of the base plate (200) to attach and fix the facing battery cells (100) in the lengthwise direction,
**characterized in that**
a positive and negative electrode structure for electrical connection of the plurality of battery cells (100) is provided on one surface of the plurality of battery cells (100),
wherein the cross beam unit (300) is attached to an opposite surface of the plurality of battery cells (100).

2. The battery pack according to claim 1, wherein one surface of the plurality of battery cells (100) is spaced a predetermined distance apart from one surface of the facing battery cells (100) in the lengthwise direction.

3. The battery pack according to claim 1, wherein the cross beam unit (300) includes a cooling water channel (315) to cool the plurality of battery cells (300).

4. The battery pack according to claim 1, comprising:
a cover plate (400) to cover an upper portion of the plurality of battery cells (100), wherein the cover plate (400) is disposed opposite the base plate (200) with the plurality of battery cells (100) interposed between the base plate (200) and the cover plate (400).

5. The battery pack according to claim 1, wherein the cross beam unit (300) is positioned between the base plate (200) and the cover plate (400), and is placed in contact with each of the base plate (200) and the cover plate (400).

6. The battery pack according to claim 1, wherein the cross beam unit (300) includes a plurality of beam members,
wherein the plurality of beam members is spaced a predetermined distance apart along the lengthwise direction of the base plate (200).

7. The battery pack according to claim 6, wherein the plurality of beam members includes:
a beam body (310) which has a cooling water channel (315) inside, and is formed over a predetermined length along the widthwise direction of the base plate (200);
a first flange (330) which is provided at a lower end of the beam body (310) and placed in contact with the base plate (200); and
a second flange (350) which is provided at an upper end of the beam body (310) opposite the first flange (330) and placed in contact with the cover plate (400).

8. The battery pack according to claim 7, wherein the first flange (330) and the second flange (350) have a larger thickness than the beam body (310) in the lengthwise direction.

9. The battery pack according to claim 7, wherein the first flange (330) covers at least part of an upper portion of the plurality of battery cells (100) in the lengthwise direction, and
the second flange (350) covers at least part of a lower portion of the plurality of battery cells (100) in the lengthwise direction.

10. The battery pack according to claim 7, wherein the plurality of battery cells (100) is directly attached to each of two surfaces of the beam body (310) in the lengthwise direction.

11. The battery pack according to claim 7, wherein the plurality of battery cells (100) is symmetrically arranged with the beam body (310) interposed between the plurality of battery cells (100) in the lengthwise direction.

12. A vehicle comprising at least one battery pack (10) according to claim 1.

## Patentansprüche

1. Batteriepack (10), der in einem Fahrzeug montiert ist, wobei der Batteriepack (10) umfasst:
mehrere Batteriezellen (100);
eine Basisplatte (200) zum Tragen der mehreren Batteriezellen (100); und
eine Querträgereinheit (300), die über eine vorbestimmte Länge entlang einer Breitenrichtung der Basisplatte (200) positioniert ist und zwischen den mehreren Batteriezellen (100) in einer Längsrichtung der Basisplatte (200) angeordnet ist, um die einander zugewandten Batteriezellen (100) in der Längsrichtung zu befestigen und zu befestigen,
**dadurch gekennzeichnet, dass** eine positive und negative Elektrodenstruktur zur elektrischen Verbindung der mehreren Batteriezellen (100) auf einer Oberfläche der mehreren Batteriezellen (100) bereitgestellt ist,
wobei die Querträgereinheit (300) an einer gegenüberliegenden Oberfläche der mehreren Batteriezellen (100) befestigt ist.

2. Batteriepack nach Anspruch 1, wobei eine Oberfläche der mehreren Batteriezellen (100) um einen vorbestimmten Abstand von einer Oberfläche der einander zugewandten Batteriezellen (100) in der Längsrichtung beabstandet ist.

3. Batteriepack nach Anspruch 1, wobei die Querträgereinheit (300) einen Kühlwasserkanal (315) aufweist, um die mehreren Batteriezellen (300) zu kühlen.

4. Batteriepack nach Anspruch 1, umfassend:
eine Abdeckplatte (400) zum Abdecken eines oberen Abschnitts der mehreren Batteriezellen (100), wobei die Abdeckplatte (400) gegenüber der Basisplatte (200) angeordnet ist, wobei die mehreren Batteriezellen (100) zwischen der Basisplatte (200) und der Abdeckplatte (400) angeordnet sind.

5. Batteriepack nach Anspruch 1, wobei die Querträgereinheit (300) zwischen der Basisplatte (200) und der Abdeckplatte (400) positioniert ist und in Kontakt mit jeder der Basisplatte (200) und der Abdeckplatte (400) platziert ist.

6. Batteriepack nach Anspruch 1, wobei die Querträgereinheit (300) mehrere Trägerelemente aufweist,
wobei die mehreren Trägerelemente um einen vorbestimmten Abstand entlang der Längsrichtung der Basisplatte (200) beabstandet sind.

7. Batteriepack nach Anspruch 6, wobei die mehreren Trägerelemente aufweisen:
einen Trägerkörper (310), der im Inneren einen Kühlwasserkanal (315) aufweist und über eine vorbestimmte Länge entlang der Breitenrichtung der Basisplatte (200) ausgebildet ist;
einen ersten Flansch (330), der an einem unteren Ende des Trägerkörpers (310) vorgesehen ist und in Kontakt mit der Basisplatte (200) platziert ist; und
einen zweiten Flansch (350), der an einem oberen Ende des Trägerkörpers (310) gegenüber dem ersten Flansch (330) vorgesehen ist und in Kontakt mit der Abdeckplatte (400) platziert ist.

8. Batteriepack nach Anspruch 7, wobei der erste Flansch (330) und der zweite Flansch (350) eine größere Dicke als der Trägerkörper (310) in der Längsrichtung aufweisen.

9. Batteriepack nach Anspruch 7, wobei der erste Flansch (330) mindestens einen Teil eines oberen Abschnitts der mehreren Batteriezellen (100) in der Längsrichtung abdeckt, und
der zweite Flansch (350) mindestens einen Teil eines unteren Abschnitts der mehreren Batteriezellen (100) in der Längsrichtung abdeckt.

10. Batteriepack nach Anspruch 7, wobei die mehreren Batteriezellen (100) direkt an jeder von zwei Oberflächen des Trägerkörpers (310) in der Längsrichtung befestigt sind.

11. Batteriepack nach Anspruch 7, wobei die mehreren Batteriezellen (100) symmetrisch angeordnet sind, wobei der Trägerkörper (310) zwischen den mehreren Batteriezellen (100) in der Längsrichtung angeordnet ist.

12. Fahrzeug, das mindestens einen Batteriepack (10) nach Anspruch 1 umfasst.

## Revendications

1. Bloc-batterie (10) monté dans un véhicule, le bloc-batterie (10) comprenant :
une pluralité de cellules de batterie (100) ;
un socle (200) pour supporter la pluralité de cellules de batterie (100) ; et
une unité de traverse (300) positionnée sur une longueur prédéterminée dans un sens de la largeur du socle (200), et intercalée entre la pluralité de cellules de batterie (100) dans un sens de la longueur du socle (200) pour attacher et fixer les cellules de batterie (100) en regard dans le sens de la longueur,
**caractérisé en ce que**
une structure d'électrode positive et négative pour une connexion électrique de la pluralité de cellules de batterie (100) étant agencée sur une surface de la pluralité de cellules de batterie (100),
l'unité de traverse (300) étant fixée sur une surface opposée de la pluralité de cellules de batterie (100).

2. Bloc-batterie selon la revendication 1, une surface de la pluralité de cellules de batterie (100) étant espacée d'une distance prédéterminée à l'écart d'une surface des cellules de batterie (100) en regard dans le sens de la longueur.

3. Bloc-batterie selon la revendication 1, l'unité de traverse (300) comprenant un conduit d'eau de refroidissement (315) pour refroidir la pluralité de cellules de batterie (300).

4. Bloc-batterie selon la revendication 1, comprenant :
un couvercle (400) pour couvrir une partie supérieure de la pluralité de cellules de batterie (100), le couvercle (400) étant disposé face au socle (200), la pluralité de cellules de batterie (100) étant intercalée entre le socle (200) et le couvercle (400).

5. Bloc-batterie selon la revendication 1, l'unité de traverse (300) étant positionnée entre le socle (200) et le couvercle (400), et étant placée au contact de chacun du socle (200) et du couvercle (400).

6. Bloc-batterie selon la revendication 1, l'unité de traverse (300) comprenant une pluralité d'éléments de traverse,
la pluralité d'éléments de traverse étant espacée d'une distance prédéterminée dans le sens de la longueur du socle (200).

7. Bloc-batterie selon la revendication 6, la pluralité d'éléments de traverse comprenant :
un corps de traverse (310) contenant un conduit d'eau de refroidissement (315) à l'intérieur, et étant formé sur une longueur prédéterminée dans le sens de la largeur du socle (200) ;
une première bride (330) agencée sur une extrémité inférieure du corps de traverse (310), et placée au contact du socle (200) ; et
une deuxième bride (350) agencée sur une extrémité supérieure du corps de traverse (310), face à la première bride (330), et placée au contact du couvercle (400).

8. Bloc-batterie selon la revendication 7, l'épaisseur de la première bride (330) et de la deuxième bride (350) étant supérieure à celle du corps de traverse (310) dans le sens de la longueur.

9. Bloc-batterie selon la revendication 7, la première bride (330) couvrant au moins une partie d'une portion supérieure de la pluralité de cellules de batterie (100) dans le sens de la longueur, et
la deuxième bride (350) couvrant au moins une partie d'une portion inférieure de la pluralité de cellules de batterie (100) dans le sens de la longueur.

10. Bloc-batterie selon la revendication 7, la pluralité de cellules de batterie (100) étant fixée directement sur chacune de deux surfaces du corps de traverse (310) dans le sens de la longueur.

11. Bloc-batterie selon la revendication 7, la pluralité de cellules de batterie (100) étant agencée symétriquement avec le corps de traverse (310) intercalé entre la pluralité de cellules de batterie (100) dans le sens de la corps de traverse.

12. Véhicule comprenant au moins un bloc-batterie (10) selon la revendication 1.
